# EUROPEAN PATENT APPLICATION

(11) **EP 2 535 375 A1**
(43) Date of publication of application: **19.12.2012**
(21) Application number: 12172033.8
(22) Date of filing: 14.06.2012
(51) Int. Cl.: C08L 27/06, C08L 97/02, C08K 5/10, C08L 1/00, C08K 3/22, C08K 3/26

(54) **Compounded composition on VC (co)polymer basis and its production method**

(30) Priority: 16.06.2011 RU 2011124600
(71) Applicant: SOLVAY SA, 1120 Bruxelles (BE)
(72) Inventor: Milov, Vladimir Ivanovich, 606039 Dzerzhinsk, Nizhny Novgorod region (RU); Mozzhukhin, Vladimir Borisovich, 606030 Dzerzinsk, Nizhny Novgorod region (RU); Mukhina, Tatyana Petrovna, 606034 Dzerzhinsk, Nizhny Novgorod region (RU); Kobyakova, Nadezhda Ksenofontovna, 606023 Dzerzhinsk, Nizhny Novgorod region (RU); Georges, Isabelle, 21700 Nuits-Saint-Georges (FR)
(74) Representative: Vande Gucht, Anne

(57) **Abstract**

Compounded composition on the basis of vinyl chloride (co)polymer containing a cellulose filler and 0,4-6,5 parts by weight, for 100 parts by weight of vinyl chloride (co)polymer, of a filler promoter expressed by the general formula : 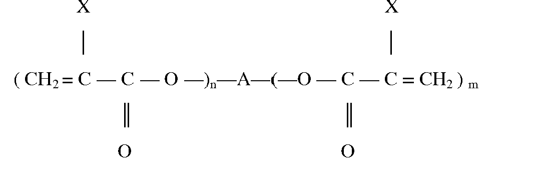 wherein:
A is the residue of a compound having at least two hydroxyl groups at molecule ends or of a compound having at least one ester or ether linkage in a molecule and at least two terminal hydroxyl groups;
X stands for a hydrogen or halogen atom or an alkyl group, such as methyl and ethyl;
n and m are integers of 1 to 3. Production method for such compounded composition.

## Description

The invention is related to compounded compositions on the basis of vinyl chloride (VC) (co)polymer (PVC) which may be processed into profile articles by extrusion method. These articles are used in construction, furniture industry etc.

Compounded compositions on vinyl chloride (co)polymer basis for profile articles need to be easily processed. They advantageously need to have high level of physico-mechanical properties, low water absorption and the absence of color changes while being processed.

Processing ability (technological effectiveness) of compounded composition on the basis of vinyl chloride (co)polymer can be evaluated by the time of plasticizing, i.e. by the time of the composition change to melt and by dynamic thermal stability, which characterizes destruction and color-change resistance of the composition while being processed.

The authors of the invention have been faced with a problem of processing improvement of compounded composition on the basis of vinyl chloride (co)polymer and of an increase of its physico-mechanical properties.

Existing technical level analysis has revealed analogues of compounded compositions, which are processed into profile articles by extrusion method.

PVC composition, assigned for production of construction and furniture profile articles and panels is known. This composition advantageously contains on 100 parts by weight of suspension PVC: 0,6-3,0 parts by weight of stabilizer, 0,4-0,8 parts by weight of lubricant, 1-10 parts by weight of mineral additive, 0,15-3,0 parts by weight of porogene, 3-25 parts by weight of emulsion PVC and 6-29 parts by weight of wood filler, which is treated with 2,5-3,5 parts by weight of polyethylene glycol or with 1,5-2,5 parts by weight of alkyl phenyl polyethylene glycol.

PVC composition production method includes preliminary blending of wood filler with polyethylene glycol or alkyl phenyl polyethylene glycol during 20 min, gradually raising the temperature up to 140°C and its following blending with PVC and the other components during 10 min under the temperature of 120°C. Extrusion is carried out by zones from 165°C to 185°C. (Inventors Certificate (Bulgarian Republic) #42763, CO8L 27/06, year 1988). Strength of the profiles on the basis of this composition is 25-44 MPa, shock resistance 6-28 kJ/m², water absorption 0,5-0,8 mass %. Technological effectiveness of this composition has been evaluated according to the plasticizing time. These data are absent in the Inventors Certificate. However, the reproduction of the composition and its production method has shown that its plasticizing time under the temperature of 180°C is 4-6 min. It means that composition has quite a long period for becoming a melt, and this fact, in turn, increases material curing time in extruder due to the extrusion speed reduction.

There has been also presented a PVC composition for profiles and leaves, used in furniture and construction industry. This composition contains on 100 parts by weight of PVC: 2-5 parts by weight of stabilizer, up to 1,5 parts by weight of lubricant, up to 5,0 parts by weight of modifier and 6-30 parts by weight of wood filler, which has been preliminarily treated with 5-30 parts by weight of unsaturated polyester resin on the basis of polypropylene glycol, maleic and phthalic anhydride with the molecular mass from 300 to 3000 (Inventors Certificate (Bulgarian Republic) #46217,CO8L 27/06, year 1989).

PVC composition is produced by a preliminary blending of wood filler with unsaturated polyester resin under the constant increase of temperature up to 160°C with the following blending of wood filler with PVC and the other composition components. Extrusion is carried out by zones from 130°C up to 180°C.

The material is not burnt in extruder while being processed, plastic deformation under the temperature of 65-75°C is ∼ 10 MPa. However, plasticization time for such compositions is 3-4 min under the temperature of 180°C, dynamic thermal stability is 30-40 min. As a result the produced articles acquire dark-beige color.

Thermoplastic resins for extrusion profiles which contain 10-65 mass. % of cellulose filler, treated with glyoxal (0,5-12 mass. %) are also known. As a thermoplastic resin one can also use polyethylene, polypropylene, PVC and others in the mixture with thermal stabilizer, antioxidant, lubricant, inorganic fillers etc. (USA patent #4687793, CO8K 9/04, year 1987).

Composition production method includes preliminary blending of cellulose filler with glyoxal under the temperature of 110°C during 15 min and its following blending with the other components under the temperature of 110°C during 5 min.

The practical examples of the invention realization given in this patent show that profile materials have low strength and low modulus of elasticity.

PVC composition and its production method under Bulgarian Republic Inventors Certificate #49553 CO8L 27/06, 1991 (called "prototype" in the present description) is the closest one to the pending invention, from the point of view of its technical essence and of the effect achieved. Under the prototype, PVC composition contains on 100 parts by weight of suspension PVC : 10-65 parts by weight of wood flour or hydrolyzed lignin powder, 1,4-9,1 parts by weight of filler promoter - chlorinated polyethylene, 1,5-2,0 parts by weight of dehumidification substance (caustic lime, hydrate of lime), 5,9-8,5 parts by weight of thermal stabilizer (1-1,5 parts by weight of dibasic tin phosphite, 1-1,5 parts by weight of tin stearate, 0,3-1,5 parts by weight of calcium stearate and 0,3-2,5 parts by weight of epoxydated soybean oil), 1,1-4,0 parts by weight of plasticizer (dioctyl phthalate, diisooctyl phthalate or diisobutyl phthalate), 2-4,2 parts by weight of lubricant (blending of stearic acid, aliphatic ether of monocarboxylic acid with single-base alcohol, ether of dycarboxylic acid with dibasic alcohol), up to 1,5 parts by weight of titanium dioxide, up to 5,0 parts by weight of calcium carbonate and 0,4-2,6 parts by weight of dispersing agent.

PVC composition production method includes preliminary blending of wood filler with promoter - chlorinated polyethylene and dehumidification substance (caustic lime or hydrate of lime) under the temperature of 110-115°C with the following blending with PVC and the other composition components under the temperature of 130-135°C. Composition is cooled up to 30-35°C and extruded under the temperature of 150-175°C.

The prototype composition has the following properties: plasticization time under the temperature of 180°C 2,0-3,5 min, dynamic thermal stability 38-45 min, strength at break 20,3-35,3 MPa, modulus of elasticity in flexure 2,5-3,5 HPa, Charpy impact viscosity 2,9-4,7 kJ/m² and water absorption 0,5-1,0 mass.%. Possessing these characteristics, composition has insufficient productivity and is able to change color, while being processed. Level of physico-mechanical properties and water absorption is also not a high one.

The invention objective is processing improvement and elevation of physico-mechanical properties of compounded composition on the basis of vinyl chloride (co)polymer.

In order to achieve this objective, the structure (content) and the method of production of a compounded composition on the basis of vinyl chloride (co)polymer have been suggested.

In order to improve processing and to elevate physico-mechanical properties, compounded composition on the basis of vinyl chloride (co)polymer containing a cellulose filler and 0,4-6,5 parts by weight, for 100 parts by weight of vinyl chloride (co)polymer, of a filler promoter expressed by the general formula has been developed: 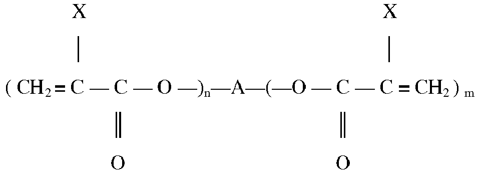 wherein:
A is the residue of a compound having at least two hydroxyl groups at molecule ends or of a compound having at least one ester or ether linkage in a molecule and at least two terminal hydroxyl groups;
X stands for a hydrogen or halogen atom or an alkyl group, such as methyl and ethyl; and n and m are integers of 1 to 3.

By the wording "a cellulose filler", it is meant, according to the present invention, one cellulose filler or a mixture of more than one cellulose filler. Preferably, a cellulose filler means one cellulose filler.

By the wording "a filler promoter", it is meant, according to the present invention, one filler promoter or a mixture of more than one filler promoter. Preferably, a filler promoter means one filler promoter.

The compounded composition contains advantageously at least 0,4, preferably at least 0,5 parts by weight, for 100 parts by weight of vinyl chloride (co)polymer, of the filler promoter defined above. The compounded composition contains advantageously at most 6,5, preferably at most 6, more preferably at most 5,5 and most preferably at most 5 parts by weight, for 100 parts by weight of vinyl chloride (co)polymer, of the filler promoter defined above. Quantities of 0.4-5.5 parts by weight, for 100 parts by weight of vinyl chloride (co)polymer, of the filler promoter defined above are particularly preferred and quantities of 0,5-5 parts by weight, for 100 parts by weight of vinyl chloride (co)polymer, are more particularly preferred.

Preferred compounded composition on the basis of vinyl chloride (co)polymer as detailed above contains further a thermal stabilizer.

By the wording "a thermal stabilizer", it is meant, according to the present invention, one thermal stabilizer or a mixture of more than one thermal stabilizer. Preferably, a thermal stabilizer means one thermal stabilizer.

More preferred compounded composition on the basis of vinyl chloride (co)polymer contains a cellulose filler, a filler promoter and a thermal stabilizer at the following components ratio of the composition, in parts by weight: vinyl chloride (co)polymer 100
thermal stabilizer 1,2-5,5
cellulose filler 10,0-50,0
filler promoter 0,5-5,0

The filler promoter is preferably chosen among ethyleneglycol dimethacrylate; propyleneglycol dimethacrylate; 1,3-butanediol dimethacrylate; 1,4-butanediol dimethacrylate; 2,3-butanediol dimethacrylate; 2-ethyl-1,3-hexanediol dimethacrylate; 1,5-pentanediol dimethacrylate; 1,6-hexanediol dimethacrylate; neopentylglycol dimethacrylate; glycerin trimethacrylate; dimethacryl (bis-dimethyleneglycol) phthalate; dimethacryl (bis-diethyleneglycol) phthalate; dimethacryl di-(bis-diethyleneglycol) phthalate; dimethacryl (bis-diethyleneglycol) maleate; dimethacryl-(1,3)-bisglycerin-2-phthalate (also named tetramethacryl (bisglycerin) phthalate); triethyleneglycol dimethacrylate; tetramethyleneglycol dimethacrylate; polyethyleneglycol dimethacrylate and trimethylolpropane trimethacrylate

Among all these filler promoters triethyleneglycol dimethacrylate (called TGM-3) (Technical Specifications 2226-426-0008947-2005) and dimethacryl-(1,3)-bisglycerin-2-phthalate (also named tetramethacryl (bisglycerin) phthalate) (called TMGP-11) are more preferred. Most preferred compounded composition on the basis of vinyl chloride (co)polymer therefore contains triethyleneglycol dimethacrylate or dimethacryl-(1,3)-bisglycerin-2-phthalate as filler promoter.

By the wording «composition on the basis of vinyl chloride (co)polymer», it is meant according to the present invention that the composition can contain one or more than one vinyl chloride (co)polymer. The terms «(co)polymer», «homopolymer» and «copolymer» are used in the present specification indifferently in the plural or in the singular. Preferably, the composition according to the invention comprises one vinyl chloride (co)polymer.

As polymer, composition may contain vinyl chloride homopolymers as well as copolymers of vinyl chloride with other ethylenically unsaturated monomers which are either halogenated (chloroolefins like vinylidene chloride; chloroacrylates; chlorinated vinylethers) or non halogenated (olefins like ethylene and propylene; styrene; vinylethers; like vinyl acetate) monomers; as well as vinyl chloride copolymers with acrylic and methacrylic acids; esters, nitriles and amides. Vinyl chloride homopolymers and vinyl chloride copolymers containing 60-85 weight % of vinyl chloride are preferred. Compounded composition containing vinyl chloride homopolymer or vinyl chloride copolymer containing 60-85 weight % of vinyl chloride are therefore particularly preferred. Suspension PVC C6358M (Government Standard 14332-78) or PVC C6558 ULP (Technical Specifications 6-01-1265-81) are the more preferred.

As cellulose filler, it is possible to use wood flour (Government Standard 16361-87), ground cereals, milled chip boards refuse etc.

As thermal stabilizer, composition may contain thioglycolate dioctyl tin of the grades OTS-17 or OTS-20 (Akzo Nobel company), mixture of Ba stearate (Technical Specifications 6-09-17-243-88), Ca stearate (Technical Specifications 6-09-17-317-96) and Zn stearate (Technical Specifications 6-09-316-96), epoxidated soybean oil (Technical Specifications 6-10-722-86), mixture of tribasic lead sulfate (Technical Specifications 6-09-40-98-75) with dibasic lead stearate (Technical Specifications 6-09-17-320-96) etc.

Compounded composition on PVC basis in accordance with the invention may also contain other conventional components like, for instance, lubricants, pigments, processing-aids and other fillers than cellulose filler, in known amounts generally used in composition on PVC basis.

As lubricant, one can use stearic acid (Government Standard 6484-96), polyethylene wax PW-200 (Technical Specifications (Bulgarian republic) 3000041455.024-2000) or oxidized hydrocarbon wax (Baerlocher GmbH company).

As processing-aid, one can use acrylic compounds from copolymers of methyl methacrylate with 5-10 mass. % of alkyl acrylate (butyl acrylate, ethyl acrylate) of the following grades: "Paraloid K-120N" (Rohm and Haas Co.); "Kane-Ace PA-210" (Kaneka Corp.); Lakris 95 (Technical Specifications 6-01-1320-86), Russia.

The pending composition may also contain titanium dioxide (Government Standard 9808-84), calcium carbonate (Government Standard 12085-73), caustic lime (Government Standard 8677-76).

Since the pending composition has advantageously not to be cured (e.g. by cross-linking), it is preferably free of unsaturated polyesters.

Very good results are obtained with the more preferred compounded composition containing a cellulose filler, a filler promoter and a thermal stabilizer at the components ratio defined above and further containing a lubricant, titanium dioxide and calcium carbonate at the following components ratio, in parts by weight:

| | |
|---|---|
| Vinyl chloride (co) polymer | 100 |
| Lubricant | 0,5-1,8 |
| Titanium dioxide | 1,0-2,0 |
| Calcium carbonate | 2,0-3,0 |

By the wording "a lubricant", it is meant, according to the present invention, one lubricant or a mixture of more than one lubricant. Preferably, a lubricant means one lubricant.

In summary, hereunder is given Table 1 with the more typical amounts of components incorporated in the composition in accordance with the invention:

**Table 1**

| | |
|---|---|
| Vinyl chloride (co) polymer | 100 |
| Cellulose filler | 10-50 |
| Thermal stabilizer | 1,2-5,5 |
| Lubricant | 0,5-1,8 |
| Titanium dioxide | 1,0-2,0 |
| Calcium carbonate | 2,0-3,0 |
| Filler promoter, preferably triethylene glycol dimethacrylate or dimethacryl-(1,3)-bisglycerin-2-phthalate | 0,5-5,0 |

In order to achieve the objective of producing a compounded composition on the basis of vinyl chloride (co)polymer according to the invention containing a cellulose filler, a filler promoter as defined above and optionally a thermal stabilizer, a lubricant, titanium dioxide and calcium carbonate, a production method has been developed. This production method is carried out:
(a) by preliminary blending of the cellulose filler with said filler promoter, under a temperature of 70-75°C during 10-15 min providing an activated filler,
(b) then the vinyl chloride (co)polymer and the other components of the composition are added and (b1) blended up to a temperature of 90-95°C during 2-3 min, then (b2) continued to be blended during 3-5 min up to a temperature of 105-110°C and (b3) the composition is continued to be blended under this temperature during 12-17 min with (b4) a following cooling down to 35-45°C.

Preferably, the production method according to the invention is such that, among the other components of the composition, the thermal stabilizer, the titanium dioxide and the calcium carbonate are added with the vinyl chloride (co)polymer before step (b1) while the lubricant is added after step (b1) and before step (b2).

The examples below illustrate the invention without limiting its scope.

### Example #1

Blending of components was made in a two-stage turboagitator of "Papenmeier" company, Germany. To the heated up to 70-75°C case of hot blending the following materials were loaded: 30 parts by weight of wood flour, 1,5 parts by weight of filler promoter TGM-3. Then they were blended at the blender speed 600 turns/min during 10-15 min. Then 100 parts by weight of PVC, 1,5 parts by weight of thioglycolate dioctyl tin, 1,5 parts by weight of titanium dioxide, 2,0 parts by weight of calcium carbonate were loaded and components blending was continued with the increased speed of the blender (up to 1400 turns/min) during 2-3 min up to the temperature of 90-95°C, and then 0,5 parts by weight of stearic acid and 0,3 parts by weight of polyethylene wax were added. Blending was continued up to the temperature of 105-110°C during 3-5 min. After that the blending speed was decreased up to 600 turns/min and blending was continued during 15 min.

Then the mixture was unloaded to the case of cold blending, where it was blended at blender speed 105 turns/min and cooled down to 35-45°C. After having been cooled, the mixture was loaded to extruder-granulator bin (combiplast, "Werner and Pfleiderer" company, Germany). Granulation was made under the temperature from 140 to 180°C by extruder zones. Processing of granules into articles was made with a single-screw extruder under the temperature from 145 to 185 °C.

From the prepared granules, samples for physico-mechanical properties estimation were produced by roll-pressing method. Properties for estimation are: strength at breat (σ_{b}), modulus of elasticity in flexure (E_{f}), Charpy impact viscosity (A) and water absorption. For estimation of plasticization time (τₚₗ) and dynamic thermal stability (τ_{dyn}) granules of compounded composition were used.

Tests methods of compounded PVC compositions are represented in table 2, structure (contents) and properties are represented in table 3.

**Table 2**

| Tests methods of compounded PVC compositions | | | | |
|---|---|---|---|---|
| # | Properties name | Contraction, dimensionali ty | Standard # | Tests conditions |
| 1. | Plasticization time | τₚₗ, min | According to plastogramm data of time from the beginning of tests to the first maximal torque, which characterizes composition change form powder state to a plastic one. | Plastograph "Brabender" firm |
| | | | | T = 180°C |
| | | | | n = 55 turns/min |
| | | | | V case = 30 cm² |
| 2. | Dynamic thermal stability | τ_{dyn}, min | According to plastogramm data of time from the beginning of tests to the second maximal torque, which characterizes the beginning of composition thermo-destruction with the production of cross-linked structures. | Plastograph "Brabender" firm |
| | | | | T = 180°C |
| | | | | n = 55 turns/min |
| | | | | V case = 30 cm³ |
| 3. | Strength at break | σ_{b}, MPa | ISO 527 Government standard 11262 | Test speed 5 mm/min type 1 |
| 4. | Modulus of elasticity in flexure | E_{f}, GPa | ISO 178 Government standard 9550 | Samples of size 40x25x2 (mm) |
| 5. | Charpy impact viscosity | A, kJ/m² | ISO 179 Government standard 4647 | Samples of size 50x6x2 (mm) |
| 6. | Water absorption | % | Government standard 4650 | Samples in the form of a disc 50±1 (mm) and thickness 3±0,2 (mm) |

### Examples ##2-13

Compositions production method - according to the example #1. Tests methods - according to the table #2. Structure (contents) and properties are represented in the table 3.

### Example #14 (for comparison with prototype)

Structure (contents), production method and composition properties-according to the Inventors Certificate (Bulgarian Republic)#49553.

### Example ##15-20 (for comparison)

Compositions production method - according to the example #1. Tests methods - according to the table #2. Structure (contents) and properties are represented in table 3.

**Table 3**

| Structure (contents) and properties of compounded PVC compositions | | | | | | | | |
|---|---|---|---|---|---|---|---|---|
| # | Composition structure (contents), parts by weight | | Properties | | | | | |
| | | | τₚₗ, min | τ_{dyn}, min | σ_{b}, MPa | E_{f}, HPa | A, kJ/m² | Water absor ption, % |
| By invention | | | | | | | | |
| 1. | PVC | 100 | | | | | | |
| | wood flour thioglycolate | 30,0 | | | | | | |
| | dioctyl tin | 1,5 | | | | | | |
| | polyethylene wax PW-200 | 0,3 | 1,0 | 60 | 52 | 3,7 | 14 | 0,50 |
| | stearic acid | 0,5 | | | | | | |
| | titanium dioxide | 1,5 | | | | | | |
| | calcium carbonate | 2,0 | | | | | | |
| | TGM-3 | 1,5 | | | | | | |
| 2. | Same as example #1, except TGM-3 | 0,5 | 1,5 | 55 | 48 | 3,5 | 12 | 0,55 |
| 3. | Same as example #1, except TGM-3 | 5,0 | 1,0 | 47 | 45 | 3,3 | 10 | 0,45 |
| 4. | PVC | 100 | | | | | | |
| | wood flour thioglycolate | 30,0 | | | | | | |
| | dioctyl tin | 1,5 | | | | | | |
| | stearic acid | 0,5 | 1,5 | 52 | 50 | 3,8 | 13 | 0,52 |
| | polyethylene wax PW-200 | 0,3 | | | | | | |
| | titanium dioxide | 1,5 | | | | | | |
| | calcium carbonate | 2,0 | | | | | | |
| | TMGP-11 | 0,5 | | | | | | |
| 5. | Same as example #4, except TMGP-11 | 5,0 | 1,2 | 46 | 47 | 3,5 | 11 | 0,43 |
| 6. | PVC | 100 | | | | | | |
| | wood flour thioglycolate | 50,0 | | | | | | |
| | dioctyl tin | 2,0 | | | | | | |
| | polyethylene wax PW-200 | 0,4 | 1,8 | 60 | 40 | 4,0 | 7 | 0,75 |
| | stearic acid | 1,0 | | | | | | |
| | titanium dioxide | 2,0 | | | | | | |
| | calcium carbonate | 3,0 | | | | | | |
| | TGM-3 | 5,0 | | | | | | |
| 7. | PVC | 100 | | | | | | |
| | wood flour thioglycolate | 10,0 | | | | | | |
| | dioctyl tin | 1,2 | | | | | | |
| | polyethylene wax PW-200 | 0,2 | 1,0 | 50 | 38 | 2,9 | 17 | 0,2 |
| | stearic acid | 0,3 | | | | | | |
| | titanium dioxide | 1,0 | | | | | | |
| | calcium carbonate | 2,0 | | | | | | |
| | TGM-3 | 0,5 | | | | | | |
| 8. | PVC | 100 | | | | | | |
| | ground cereals | 10 | | | | | | |
| | Ba-Cd-Zn stabilizer | 2,2 | | | | | | |
| | stearic acid | 0,5 | 1,5 | 45 | 38 | 2,7 | 15 | 0,20 |
| | titanium dioxide | 1,5 | | | | | | |
| | calcium carbonate | 2,0 | | | | | | |
| | TGM-3 | 2,5 | | | | | | |
| 9. | PVC | 100 | | | | | | |
| | ground cereals | 50 | | | | | | |
| | Ba-Cd-Zn stabilizer | 2,5 | | | | | | |
| | stearic acid | 1,5 | | | | | | |
| | epoxydated soybean oil | 3,0 | 2,0 | 55 | 35 | 4,3 | 8 | 0,70 |
| | polyethylene wax | 0,3 | | | | | | |
| | titanium dioxide | 2,0 | | | | | | |
| | calcium carbonate | 3,0 | | | | | | |
| | TMGP-11 | 2,5 | | | | | | |
| 10. | PVC | 100 | | | | | | |
| | chip boards refuse | 50 | | | | | | |
| | mixture of tribasic lead sulfate | 3,0 | | | | | | |
| | dibasic lead stearate | 1,0 | 2,0 | 65 | 36 | 4,5 | 6 | 0,55 |
| | stearic acid | 1,0 | | | | | | |
| | oxidized hydrocarbon wax | 0,25 | | | | | | |
| | calcium carbonate | 3,0 | | | | | | |
| | titanium dioxide | 2,0 | | | | | | |
| | TGM-3 | 5,0 | | | | | | |
| 11. | PVC | 100 | | | | | | |
| | wood flour | 30,0 | | | | | | |
| | thioglycolate dioctyl tin | 1,5 | | | | | | |
| | polyethylene wax PW-200 | 0,3 | | | | | | |
| | stearic acid | 0,5 | 1,0 | 48 | 53 | 3,9 | 15 | 0,50 |
| | titanium dioxide | 1,5 | | | | | | |
| | calcium carbonate | 2,0 | | | | | | |
| | TGM-3 | 5,0 | | | | | | |
| | Lakris 95 | 3,0 | | | | | | |
| 12. | PVC | 100 | | | | | | |
| | wood flour | 30,0 | | | | | | |
| | thioglycolate dioctyl tin | 1,5 | | | | | | |
| | polyethylene wax PW-200 | 0,3 | | | | | | |
| | stearic acid | 0,5 | 1,0 | 52 | 48 | 3,5 | 12 | 0,30 |
| | titanium dioxide | 1,5 | | | | | | |
| | calcium carbonate | 2,0 | | | | | | |
| | TGM-3 | 5,0 | | | | | | |
| | caustic lime | 0,1 | | | | | | |
| 13. | PVC | 100 | | | | | | |
| | wood flour | 30,0 | | | | | | |
| | thioglycolate dioctyl tin | 1,5 | | | | | | |
| | polyethylene wax PW-200 | 0,3 | | | | | | |
| | stearic acid | 0,5 | 0,7 | 50 | 50 | 3,7 | 14 | 0,30 |
| | titanium dioxide | 1,5 | | | | | | |
| | calcium carbonate | 2,0 | | | | | | |
| | TGM-3 | 5,0 | | | | | | |
| | Lakris 95 | 3,0 | | | | | | |
| | caustic lime | 0,1 | | | | | | |

| For comparison | | | | | | | | |
|---|---|---|---|---|---|---|---|---|
| 14. | With prototype* | | 2÷3,5 | 38÷45 | 20,3÷33,7 | 2,5÷3,5 | 2,9÷4,5 | 0,5÷1 |
| 15. | Same as example #1, except TGM-3 | 0,3 | 3,0 | 60 | 45 | 2,5 | 8 | 0,60 |
| 16. | Same as example #1, except TGM-3 | 7,0 | 2,5 | 30 | 35 | 2,3 | 6 | 0,70 |
| 17. | Same as example #4, except TMGP-11 | 0,3 | 2,5 | 50 | 33 | 3,5 | 5 | 1,00 |
| 18. | Same as example #4, except TMGP-11 | 7,0 | 3,0 | 35 | 31 | 3,7 | 5 | 0,90 |
| 19. | PVC | 100 | | | | | | |
| | wood flour | 30,0 | | | | | | |
| | thioglycolate dioctyl tin | 1,5 | | | | | | |
| | polyethylene wax PW-200 | 0,3 | 5,0 | 65 | 32 | 2,2 | 3 | 0,70 |
| | stearic acid | 0,5 | | | | | | |
| | titanium dioxide | 1,5 | | | | | | |
| | calcium carbonate | 2,0 | | | | | | |
| 20. | PVC | 100 | In the plastograph case ("Brabender" firm) and while granulating in extruder, melt is not produced. Composition stays in a powder state. | | | | | |
| | ground cereals | 50 | | | | | | |
| | Ba-Cd-Zn stabilizer | 2,5 | | | | | | |
| | stearic acid | 1,5 | | | | | | |
| | epoxydated soybean oil | 3,0 | | | | | | |
| | polyethylene wax PW-200 | 0,3 | | | | | | |
| | titanium dioxide | 1,0 | | | | | | |
| | calcium carbonate | 2,0 | | | | | | |

| | | | | | | | | |
|---|---|---|---|---|---|---|---|---|
| * Properties in columns 3 and 4 are determined by the invention authors. | | | | | | | | |

From the data, represented in table 3 one can see, that plasticization time of the pending composition under the temperature of 180°C is 0,7-2,0 min, thermal stability under the temperature of 180°C is 45-65 min, tensile strength is 35-53 MPa, modulus of elasticity in flexure is 2,7-4,5 HPa, impact viscosity is 6-17 kJ/m², water absorption is 0,2-0,75 mass. %. These properties of the pending compounded composition surpass greatly the prototype properties, where plasticization time is 2,0-3,5 min, thermal stability is 38-45 min, tensile strength is 20,3-33,7 MPa, modulus of elasticity in flexure is 2,5-3,5 HPa, impact viscosity is 2,9-4,5 kJ/m², water absorption is 0,5-1,0 mass. % (have a look at the examples ##1-13 by comparison with #14).

Examples ##15-18 show, that the use of filler promoter in quantities beyond the bounds of declared ones increases plasticization time of composition and worsens its physico-mechanical properties.

Examples ##19-20, given in the table 3, show, that compounded compositions of the same structure (contents), but without filler promoter is inferior in all the properties to the pending compounded composition.

The authors' aim - improvement of processing and of physico-mechanical properties - is reached with the help of the structure (contents) of the pending composition and its production method. Production method of the pending composition is different from the method by prototype. Activation of filler is made under the temperature of 70-75°C (by prototype - under the temperature of 110-115°C), blending with polymer and other composition components at temperature of 90-95°C (by prototype - under the temperature of 130-135°C), final blending temperature is 105-110°C (by prototype - 130-135°C).

Filler treating under the temperature of 70-75 °C leads to an optimal distribution of the promoter in the filler pourers and to the electric power saving.

Increase of blending temperature up to 130-135°C leads to a production of hard monolithic parts of "fish eyes" type in a mixture. These parts, while being processed in profiles, worsen the appearance of an article.

The pending structure (contents) of compounded composition on the basis of vinyl chloride (co)polymer and its production method let process itself by extrusion into profile articles with improved physico-mechanical properties and low water absorption.

## Claims

1. Compounded composition on the basis of vinyl chloride (co)polymer containing a cellulose filler and 0,4-6,5 parts by weight, for 100 parts by weight of vinyl chloride (co)polymer, of a filler promoter expressed by the general formula : 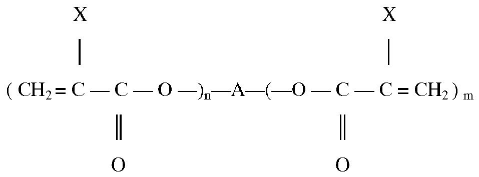 wherein :
A is the residue of a compound having at least two hydroxyl groups at molecule ends or of a compound having at least one ester or ether linkage in a molecule and at least two terminal hydroxyl groups;
X stands for a hydrogen or halogen atom or an alkyl group, such as methyl and ethyl;
n and m are integers of 1 to 3.

2. Compounded composition according to Claim 1, containing further a thermal stabilizer.

3. Compounded composition according to Claim 2, containing a cellulose filler, a filler promoter and a thermal stabilizer at the following components ratio of the composition, in parts by weight:
| | |
|---|---|
| vinyl chloride (co)polymer | 100 |
| thermal stabilizer | 1,2-5,5 |
| cellulose filler | 10,0-50,0 |
| filler promoter | 0,5-5,0 |

4. Compounded composition according to any one of Claims 1 to 3, containing triethyleneglycol dimethacrylate or dimethacryl-(1,3)-bisglycerin-2-phthalate as filler promoter.

5. Compounded composition according to any one of Claims 1 to 4,
wherein as vinyl chloride (co)polymer it contains vinyl chloride homopolymer or vinyl chloride copolymer containing 60-85 weight % of vinyl chloride.

6. Compounded composition according to any one of Claims 3 to 5, containing further a lubricant, titanium dioxide, calcium carbonate at the following components ratio, in parts by weight:
| | |
|---|---|
| vinyl chloride (co)polymer | 100 |
| lubricant | 0,5-1,8 |
| titanium dioxide | 1,0-2,0 |
| calcium carbonate | 2,0-3,0 |

7. Production method of a compounded composition on basis of vinyl chloride (co)polymer according to Claims 1 to 6, which contains a cellulose filler, a filler promoter as defined in Claim 1 and optionally a thermal stabilizer, a lubricant, titanium dioxide and calcium carbonate, which is carried out:
(a) by preliminary blending of the cellulose filler with said filler promoter, under a temperature of 70-75°C during 10-15 min providing an activated filler,
(b) then the vinyl chloride (co)polymer and the other components of the composition are added and (b1) blended up to a temperature of 90-95°C during 2-3 min, then (b2) continued to be blended during 3-5 min up to a temperature of 105-110°C and (b3) the composition is continued to be blended under this temperature during 12-17 min with (b4) a following cooling down to 35-45°C.

8. Production method according to Claim 7, according to which, among the other components of the composition, the thermal stabilizer, the titanium dioxide and the calcium carbonate are added with the vinyl chloride (co)polymer before step (b1) while the lubricant is added after step (b1) and before step (b2).
